Europäisches Patentamt

**European Patent Office**

Office européen des brevets

(11) Numéro de publication: **0 306 396 B1**

## (12) FASCICULE DE BREVET EUROPEEN

(45) Date de publication de fascicule du brevet: **16.12.92**   (51) Int. Cl.⁵: **G01K 3/00**, G01K 7/00

(21) Numéro de dépôt: **88402171.8**

(22) Date de dépôt: **26.08.88**

(54) **Circuit de détection de seuil de température.**

(30) Priorité: **31.08.87 FR 8712070**

(43) Date de publication de la demande:
**08.03.89 Bulletin  89/10**

(45) Mention de la délivrance du brevet:
**16.12.92 Bulletin  92/51**

(84) Etats contractants désignés:
**DE ES FR GB IT NL**

(56) Documents cités:
**DE-B- 1 141 805          DE-B- 2 519 335**
**FR-A- 1 562 112          GB-A- 2 096 771**
**US-A- 3 491 596          US-A- 3 540 283**

(73) Titulaire: **SGS-THOMSON MICROELECTRO-NICS S.A.**
**7, Avenue Galliéni**
**F-94250 Gentilly(FR)**

(72) Inventeur: **Fruhauf, Serge**
**Cabinet Ballot-Schmit 7, rue le Sueur**
**F-75116 Paris(FR)**
Inventeur: **Mattera, Eric**
**Cabinet Ballot-Schmit 7, rue le Sueur**
**F-75116 Paris(FR)**

(74) Mandataire: **Ballot, Paul Denis Jacques et al**
**Cabinet Ballot-Schmit, 7, rue le Sueur**
**F-75116 Paris(FR)**

## Description

La présente invention a pour objet un circuit de détection de seuil de température utilisable dans tous les domaines où un contrôle de la température doit être exercé. Mais l'invention est plus particulièrement utilisable dans le domaine des circuits intégrés et, dans celui-ci, dans le domaine des mémoires.

Il est connu que l'utilisation des circuits intégrés électroniques provoque leur échauffement par le passage des différentes impulsions de courant qui les exictent en particulier lors des opérations de programmation. En effet,en particulier avec les mémoires non volatiles munies de points mémoire avec transistor à grille flottante (du type EPROM ou EEPROM), les impulsions de courant ou de tension doivent être plus importantes pour forcer la migration des charges électriques dans les grilles flottantes des transistors des points mémoire au moment de programmer ces points. Si la cadence de programmation est trop élevée, il peut en résulter une détérioration irréversible du circuit intégré. Pour remédier à cet inconvénient il est connu de limiter le rythme de programmation en fonction de l'aptitude au refroidissement du circuit intégré à programmer. Cet inconvénient limite cependant l'utilisation des mémoires dont le point mémoire est muni de transistors à grille flottante comme mémoire à accès aléatoire d'un micro-processeur.

En outre il est supposé que des fraudeurs tenteront d'utiliser les abérrations de programmation qui pourront résulter d'un échauffement artificiel extérieur d'un tel circuit intégré avant sa programmation. De tels fraudeurs pourraient ainsi être tentés, pendant cette programmation, de maintenir ces circuits à des températures, inférieures au seuil de destruction irréversible, mais supérieures à un seuil limite de fonctionnement normal du circuit. Lors d'un refroidissement ultérieur le contenu des informations stockées dans un tel circuit pourrait être différent de celui qui y a été introduit pendant la programmation. Ce contenu différent pourrait permettre l'utilisation d'une carte à mémoire ainsi frauduleusement modifiée à des fins malhonnêtes. Le fonctionnement inverse est d'ailleurs également envisageable. Une carte munie d'une mémoire régulièrement programmée pourrait, si elle était chauffée globalement, avoir temporairement un contenu d'information modifié et risquerait de permettre des opérations auxquelles elle devrait normalement interdire l'accès. Cette dernière fraude serait d'autant plus subtile qu'elle serait indétectable. En effet, en vérification à froid, la carte apparaîtrait de nouveau conforme.

On connaît des détecteurs de température à base de circuits intégrés comportant essentiellement un transistor de type MOS polarisé en direct et dont le seuil de conduction est connu pour varier avec la température. Typiquement pour les transistors au silicium ce seuil de conduction varie entre 0,3 volts et 0,5 volts pour une variation de température de l'ordre de 100 ° C aux températures habituelles d'utilisation. Ce détecteur de température présente cependant l'inconvénient de ne pas être très sensible : une très faible variation de tension correspond à une gamme importante de température. En outre, si cette variation de tension ne dépend pas de la géométrie du transistor réalisé, elle dépend d'une manière importante des concentrations d'impuretés effectivement implantées dans les régions de source et drain et dans les caissons des transistors ainsi constitués pour servir de détecteurs de température. En effet, du fait des dispersions naturelles des conditions de fabrication, ces détecteurs de température deviennent peu fiables en plus de leur manque de sensibilité. Leur seuil de détection varie trop d'un détecteur à l'autre. Dans la pratique ces solutions sont rejetées et remplacées par des consignes de précaution tendant à limiter l'utilisation de tels circuits intégrés, ce qui en réduit l'utilisation comme mémoire à accès aléatoire, et ce qui bien entendu est sans effet sur les intentions des fraudeurs. L'invention a pour objet de rémédier à ces inconvénients en proposant la mise en oeuvre d'un autre phénomène physique. On s'est rendu compte en effet que le courant de saturation d'un transistor polarisé en inverse évoluait de manière notable en fonction de la température. On peut même montrer que ce courant peut doubler alors que la température ne varie que de quelques degrés C. En outre dans une réalisation perfectionnée, où deux transistors sont utilisés montés en série et polarisés en inverse tous les deux, on peut montrer que les seuils calibrés de détection sont moins sensibles aux dispersions de fabrication et sont éqalement moins sensibles aux conditions d'utilisation c'est-à-dire quand la tension d'alimentation s'écarte d'une valeur Vcc nominale. On connaît du document DE-B-11 4185 des circuits de mesure de température utilisant des jonctions polarisées en inverse. On connaît du document EP-A-0 240 807 un détecteur de température utilisant un transistor bipolaire.

L'invention a pour objet un circuit de détection de seuil de température, caractérisé en ce qu'il comporte au moins un transistor MOSFET, en contact thermique avec une source de chaleur à surveiller, ce transistor étant polarisé en mode bloqué par un circuit d'alimentation électrique et en ce qu'il comporte des moyens pour mesurer le courant fonction de la température de la source de chaleur qui traverse ce transistor.

L'invention sera mieux comprise à la lecture de la description qui suit et à l'examen des figures qui l'accompagnent. Elles ne sont qu'indicatives et nullement limitatives de l'invention. Les figures montrent :

- figures 1a et 1b : des exemples préférés de réalisation de détecteurs de seuil de température conforme à l'invention ;
- figure 2 : une coupe schématique d'une implantation du détecteur de la figure 1b dans le substrat semiconducteur d'un circuit intégré;
- figure 3 : des courbes montrant l'évolution de tensions caractéristiques dans les détecteurs en fonction de la température.

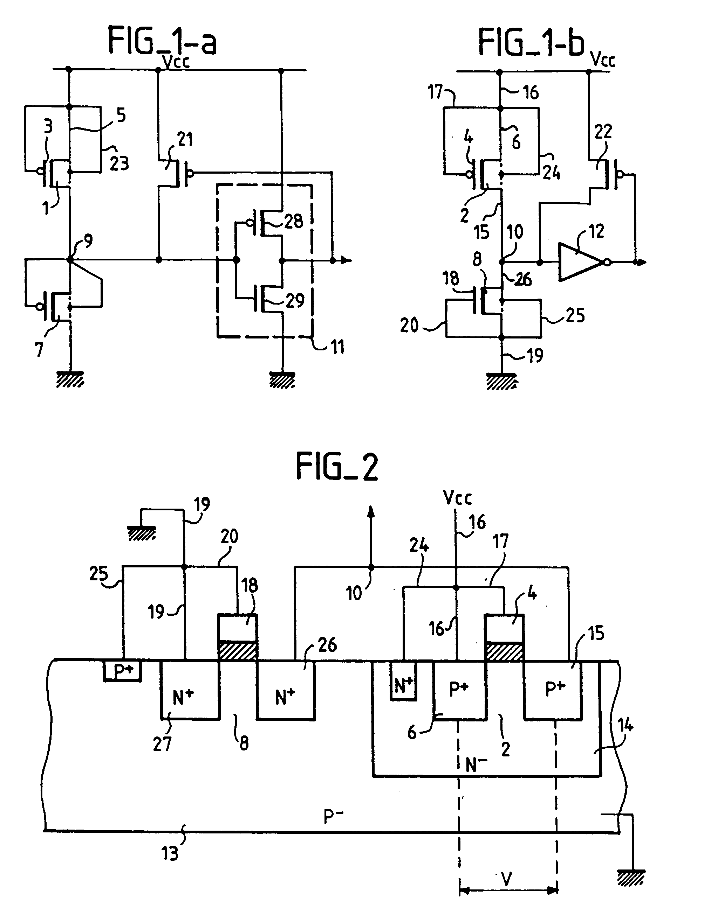

Les figures 1a et 1b montrent des détecteurs de seuil de température conforme à l'invention. Ces détecteurs comportent au moins un transistor, respectivement 1 et 2, polarisé en inverse en alimentation électrique entre Vcc et la masse. Dans l'exemple représenté les transistors 1 et 2 sont des transistors à canal P et la tension Vcc est positive. Les transistors à canal P sont schématiquement différenciés des transistors à canal N par la présence d'un petit rond sur leur grille. Les transistors 1 et 2 sont montés en inverse puisque, étant à canal P, leurs grilles respectivement 3 et 4 sont reliées à un même potentiel que leur source respectivement 5 et 6. Le détecteur de seuil de température de l'invention comporte encore des moyens de mesure du courant inverse de saturation qui traverse les transistors 1 et 2. Dans un exemple préféré de réalisation ces moyens de mesure comportent un deuxième transistor respectivement 7 et 8, en série avec le premier transistor respectivement 1 et 2, et également polarisé en inverse par l'alimentation électrique. Dans la figure 1a le transistor 7 est aussi un transistor à canal P : sa grille est reliée à sa source. Dans la figure 1b le transistor 8 est à canal N : sa grille est reliée à sa source c'est-à-dire à la masse. Ce deuxième transistor joue ainsi le rôle d'une résistance dont la tension disponible aux bornes dépend du courant de saturation qui passe dans le premier transistor de détection de température de seuil.

En connectant le point milieu, respectivement 9 et 10, de ces montages a des inverseurs 11 et 12 on peut provoquer le basculement de ces inverseurs lorsque la tension disponible à ces points milieu dépasse un seuil prédéterminé. Les moyens de mesure du courant inverse de saturation peuvent bien entendu être différents. Mais la solution ainsi présentée possède l'avantage de délivrer une réponse par tout ou rien pour un seuil prédéterminé de température. Cette réponse binaire peut alors être utilisée pour constituer une alarme ,ou, dans le cas où le détecteur est intégré sur le subtrat d'un circuit intégré, pour invalider le fonctionnement de ce circuit intégré dont la température dépasserait le seuil en question. Ce circuit deviendrait alors momentanément inutilisable, en programmation ou en lecture, ce qui empêcherait la fraude. En outre en cas de programmation trop rapide ou peut valider l'exécution de la programmation par le signal disponible à la sortie des inverseurs 11 et 12. On est ainsi assuré de toujours pouvoir utiliser la vitesse maximale de programmation. Les mémoires dites EEPROM deviennent alors utilisables comme mémoire à accès aléatoire.

On peut expliquer le phénomène physique mis en oeuvre de la manière suivante. Si on appelee Is le courant inverse de saturation d'un transistor on sait que Is est le courant de saturation de la jonction source-canal de ce transistor et qu'il varie avec la température. En effet ce courant peut s'écrire :

$$IS = q.A (Dp.Pno/Lp - Dn.Npo/Ln)$$

Dans cette formule q représente la charge de l'électron ; A représente l'aire de la jonction source-canal. Cette aire dépend de la géométrie retenue pour la réalisation du transistor. Les constantes contenues dans les parenthèses représentent les caractéristiques de diffusion des impuretés dans les régions source, drain, et canal des transistors sensibles à la température. Ces constantes dépendent des procédés de fabrication de ces transistors. La constante Dp représente la constante de diffusion des trous dans un semiconducteur de type N. La constante Lp représente la longueur de diffusion des trous dans un semiconducteur de type N. La constante Pno représente la concentration, à l'équilibre, des porteurs minoritaires dans un semiconducteur de type N, c'est à dire des trous. Réciproquement la constante Dn représente la constante de diffusion des électrons dans un semiconducteur de type P. La constante Ln représente la longueur de diffusion des électrons dans un semiconducteur de type P. Et la constante Npo représente la concentration, à l'équilibre, des porteurs minoritaires dans un semiconducteur de type P.

On peut considérer qu'un des deux termes contenus dans les parenthèses est prépondérant par rapport à l'autre. En effet une des régions du transistor :la région source, est nettement plus dopée, avec un transistor de type CMOS, que la zone de canal de conduction. Dans ces conditions le courant Is peut s'écrire

$$Is = q.A.D.Ni^2/L.N$$

Dans cette expression D correspondant à la constante de diffusion prépondérante, L correspond à la longueur de diffusion correspondante, N représente la concentration d'impuretés et Ni représente la concentration intrinsèque de porteurs. Or on sait que la concentration intrinsèque de porteur peut

s'écrire

$$Ni^2 = Ao \, T^3 \exp(-Ego/kT)$$

Dans cette expression T représente la température, Ego représente la largeur de la bande interdite à 0°K, Ao représente une constante indépendante de la température, et k représente la constante de BOLTZMANN. Il en résulte alors que Is est proportionnel au cube de la température T et à l'exponentielle contenue dans les parenthèses. Si on dérive l'expression de Is en fonction de la température pour mesurer la sensibilité du courant de saturation à la variation de température, et si on exprime la dérivée en fonction du courant de saturation Is lui-même on obtient l'expression suivante particulièrement intéressante :

$$dIs/dT = Is((3/T + (Ego/k.T^2))$$

Dans une application numérique où T vaut de l'ordre de 300°K, le coefficient entre les doubles parenthèse est sensiblement égal à 0,165. Ceci signifie que pour une variation de température de l'ordre de 6°C (6 x 0, 165 = 0,99) le courant de saturation double. On voit immédiatement que la sensibilité du détecteur de température ainsi constitué est grande. Si de plus on prend la précaution de mesurer des variations relatives (c'est à dire comparé à lui-même) du courant de saturation Is, on constitue un détecteur de température dont la fiabilité est indépendant des concentrations réellement imposées pour réaliser les transistors. En effet la dernière expression des variations relatives du courant Is montre que les constantes liées au procédé de fabrication ont en définitive disparu de l'expression. Il en résulte que la détermination de seuil de détection ne sera dû qu'au circuit de détection lui-même et non pas au détecteur proprement dit.

Dans l'application particulière envisagée le détecteur de température est intégré sur le même circuit intégré que celui qu'il est censé de protéger. On a représenté sur la figure 2 un schéma d'implantation correspondant à la figure 1b pour bien montrer des variantes de connexion réalisées dans ce cas. Cependant comme on le verra plus loin, d'une manière préférée le montage de la figure 1a est préféré : il est plus sensible. La figure 2, en référence, à la figure 1b, montre un substrat 13 dans lequel est réalisé un circuit intégré à protéger. Le substrat 13, dans un exemple dopé P-, comporte un caisson 14 pour recevoir le transistor 2. Le caisson 14 est dopé N-avec une concentration d'impuretés supérieure à la concentration d'impuretés P- du substrat. Le transistor 2 comporte une région source 6 et une région drain 15. Les régions 6 et 15 sont dopées P + avec des concentrations supérieures à la concentration d'impuretés implantées dans le caisson 14. Le transistor 2 est naturellement bloqué par la connexion commune 16-17 de sa source 6 et de sa grille 4 au potentiel Vcc de l'alimentation. Dans l'exemple représenté le substrat 13 est connecté à la masse. Le drain 15 du transistor à canal P 2 est relié au drain 26 du transistor à canal N 8. La source 27 du transistor 8 est reliée à la grille 18 de ce transistor 8 et à la masse par une connexion 19-20.

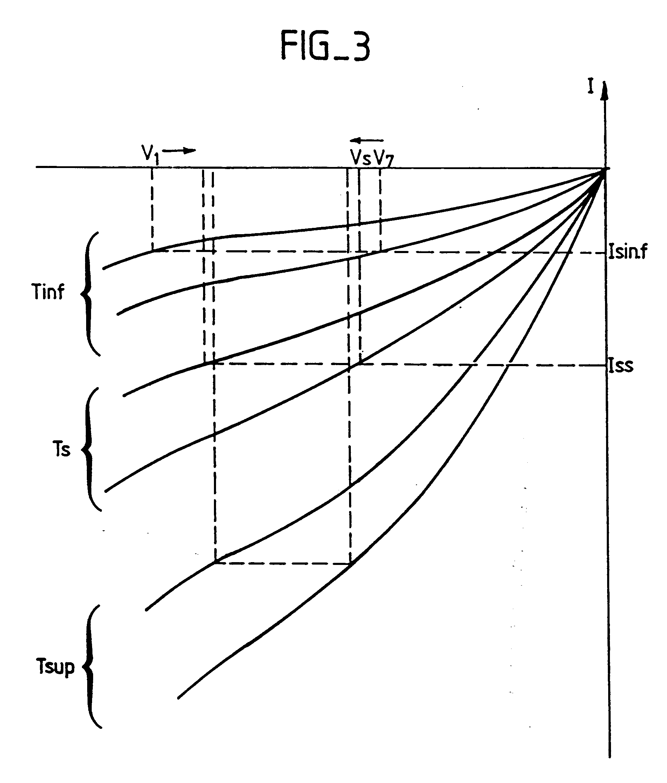

Quel que soit le montage, les transistors ainsi mis en série et polarisés en inverse possèdent la particularité essentielle d'être de tailles différentes. Etant de tailles différentes, le courant inverse qui les traverse est le courant de saturation imposé pour le plus petit d'entre eux. En effet comme ils sont en série le courant qui traversera l'autre transistor est inférieur au courant de saturation propre à cet autre transistor. La figure 3 montre l'évolution des caractéristiques comparées des tensions et courants inverses dans les transistors 1 et 7 (figure 1a) en fonction de la température. A température Tinf inférieure au seuil de déclenchement Ts, un même courant inverse de saturation Isinf traverse les deux transistors. Le petit transistor, par exemple le transistor 1, provoque une chute de tension V1 tandis que l'autre, le transistor 7, provoque une chute de tension V7. Les chutes de tension sont telles que V1 + V7 = Vcc. La tension au point milieu s'établit en conséquence. Lorsque la température s'élève et qu'en définitive le courant inverse de saturation augmente, la résistance équivalente en inverse du petit transistor chute. La résistance du gros transistor chute aussi, ce transistor est aussi soumis à l'échauffement, les courbes caractéristiques se déplacent vers le bas. Mais la variation de cette dernière résistance est inférieure. Il en résulte que la tension V7 augmente tandis que V1 chute. Pour Is = Iss le seuil prédéterminé de tension Vs est atteint par la tension V7. Le point milieu du pont diviseur constitué par les deux transistors en série est donc situé à un potentiel qui évolue avec la température du fait de la plus grande chute relative de la résistance équivalente en inverse du petit transistor. On utilise alors la valeur de ce potentiel pour déclencher un comparateur à seuil.

Dans la pratique le comparateur à seuil peut être un inverseur dont le seuil de basculement est fixé proche d'une valeur sensiblement égale à la moitié de tension d'alimentation Vcc par les dimensions des largeurs et longueurs des transistors 28 et 29 constituant cet inverseur. Le fonctionnement dynamique de ce détecteur n'étant pas, dans une application à une mémoire EPROM, d'un caractère important la vitesse de basculement de l'inverseur n'y est pas critique. Et on peut se permettre d'avoir, en limite inférieure du seuil de température, une non communication. Cependant, dans le cas où il s'avère nécessaire de détecter rapidement et confortablement, on peut réaliser le comparateur à l'aide d'un inverseur bistable. Le caractère bistable peut être obtenu en adjoignant entre l'entrée de l'inverseur et le pôle positif de l'alimentation un transistor 21 ou 22 à canal P dont la grille est reliée à la sortie de l'inverseur. Lorsque la température est basse, le transistor détecteur de température présente une résistance élevée, et la tension du point milieu 9, ou 10 est faible. Dans ces conditions la sortie de l'inverseur 11 est à Vcc et les transistors 21 ou 22 sont naturellement bloqués. Par contre, lorsque le seuil de température à été dépassé, la résistance interne des transistors 1 ou 2 a beaucoup chuté et la tension des points milieux 9 ou 10 s'est élevée. Dans ces conditions les bistables 11-21 ou 12-22 basculent. L'inverseur 11 est détaillé. Il comporte d'une manière connue un transistor 28 à canal P en série avec un transistor 29 à canal N. Les grilles de ces transistors sont reliées et servent de bornes d'entrée, le point milieu des transistors sert de sortie.

D'une manière préférée dans l'invention les caissons 14 des transistors à canal P tels que 1 ou 2 sont reliés à un même potentiel que les sources respectivement 5 ou 6 de ces transistors. En effet si source, grille et caisson d'un même transistor à canal P ne sont pas à un même potentiel le courant inverse de saturation qui devrait normalement s'écouler entre source, canal et drain peut aussi s'écouler entre source, canal et substrat. En effet le substrat généralement polarisé à la masse peut collecter les porteurs minoritaires. En réalisant une prise de caisson telle que 23 ou 24 on porte le caisson 14 à un potentiel élevé : si source et caisson sont au même potentiel aucune partie du courant de saturation ne peut circuler entre ces deux plots. Par réciprocité pour le transistor 8, le substrat 13 est relié à la masse en même temps que la source 17 par une connexion 25.

On remarque cependant que si le montage de la figure 1a est possible, en réalisant deux caissons séparés pour les deux transistors à canal P 1 et 7 (la prise de caisson du transistor à canal P 7 étant portée alors au potentiel du point milieu 9), cette solution n'est pas transposable à un montage avec 2 transistors à canal N montés en série et réalisés dans un même substrat P. En effet il n'est pas possible de porter le substrat P d'une part au potentiel de la masse et d'autre part au potentiel du point milieu de montage. Donc avec substrat de type P on peut constituer un montage détecteur à seuil comportant deux transistors (de taille inégale) de canal P et de canal P, ou de canal P et de canal N, mais pas de canal N et de canal N.

Si l'on appelle W la largeur d'un transistor, et si l'on appelle V la longueur de ce transistor mesurée (figure 2) dans le plan du circuit intégré perpendiculairement à la largeur W on a pu mesurer, en prenant pour le transistor 1 un rapport W/V = 5/5 et en prenant pour le transistor 7 un rapport W/V = 5/6, que le seuil de détection en température d'un inverseur de type bistable calé pour basculer à Vcc /2 se situait entre 87°C et 96°C quelle que soit la variation de l'alimentation Vcc entre 4,5 volts et 5,5 volts et quels que soient les pires cas de variation des concentrations d'impuretés N et P pour réaliser les transistors. Compte-tenu d'une température limite de fonctionnement des circuits intégrés de l'ordre de 100° un tel détecteur peut être utilisé pour invalider l'utilisation de ces circuits ou, pour le moins, constituer un signal d'alarme.

Le déséquilibre du pont des transistors provoqué par leur différence de tailles, peut être remplacé par un déséquilibre des concentrations. Les courbes de la figure 3 en seraient modifiées, mais un fonctionnement similaire pourrait être obtenu. Dans ce cas cependant l'indépendance du seuil de détection vis à vis des phases du procédé de fabrication est moins bien garantie.

## Revendications

1. Circuit de détection de seuil de température, caractérisé en ce qu'il comporte au moins un transistor MOSFET (1), en contact thermique avec une source de chaleur à surveiller, ce transistor (1) étant polarisé en mode bloqué par un circuit (Vcc) d'alimentation électrique et en ce qu'il comporte des moyens (7, 11) pour mesurer le courant (Is) fonction de la température de la source de chaleur qui traverse ce transistor.

2. Circuit selon la revendication 1, caractérisé en ce que les moyens pour mesurer comportent un deuxième transistor (7) en série (9) avec le premier et polarisé en mode bloqué par l'alimentation, de longueur (V) différente du premier, et un comparateur à seuil (11) relié au point milieu (9) de ces deux transistors.

3. Circuit selon la revendication 2, caractérisé en ce qu'il est intégré dans le substrat (13) d'un circuit intégré pour en assurer la surveillance thermique.

4. Circuit selon l'une quelconque des revendications 2 ou 3, caractérisé en ce que les deux transistors sont à canal de conduction identique (P)

5. Circuit selon l'une quelconque des revendications 2 à 4, caractérisé en ce qu'un des transistors est à canal P, est réalisé dans un substrat dopé P et est contenu dans un caisson (14) relié (16) électriquement au potentiel de source de ce transistor.

## Claims

1. A temperature threshold detection circuit, characterized in that it comprises at least one MOSFET transistor (1) in thermal contact with a heat source to be monitored, the said transistor (1) being biassed in non-conducting mode by an electrical supply circuit (Vcc) and in that it comprises means (7, 11) for measuring the current (Is), dependent on the temperature of the heat source, which passes through the said transistor.

2. A circuit as claimed in claim 1, characterized in that the measuring means comprise a second transistor (7) in series with the first and biased in blocked mode by the supply, and having a different length (V) to the first, and a threshold comparator (11) connected to the mid-point (9) of the two transistors.

3. A circuit as claimed in claim 2, characterized in that it is integrated in the substrate (13) of an integrated circuit to provide temperature monitoring thereof.

4. A circuit as claimed in claim 2 or in claim 3, characterized in that the two transistors are of the same conduction channel type (P).

5. A circuit as claimed in any one of claims 2 to 4, characterized in that one of the transistors is a P channel transistor which is formed in a P doped substrate and is contained in an island (14) connected (16) electrically to the potential of the source of the said transistor.

## Patentansprüche

1. Temperaturpegeldetektorschaltung, gekennzeichnet durch wenigstens einen MOSFET-Transistor (1), der mit einer zu überwachenden Wärmequelle thermisch in Kontakt steht, wobei dieser Transistor (1) durch eine elektrische Versorgungsschaltung (Vcc) in Sperrichtung vorgespannt ist, und durch Mittel (7, 11) zum Messen des von der Temperatur der Wärmequelle abhängigen Stroms (Is), der den Transistor durchfließt.

2. Schaltung nach Anspruch 1, dadurch gekennzeichnet, daß die Mittel zum Messen einen zweiten in Serie (9) mit dem ersten Transistor geschalteten und durch die Versorgungsschaltung in Sperrichtung vorgespannten Transistor (7) mit einer bezüglich des ersten Transistors verschiedenen Länge (V) enthält, und einen Schwellenwertkomparator (11) enthält, der an den Mittelpunkt (9) der zwei Transistoren angeschlossen ist.

3. Schaltung nach Anspruch 2, dadurch gekennzeichnet, daß sie in dem Substrat (13) einer integrierten Schaltung zur Gewährleistung deren thermischer Überwachung integriert ist.

4. Schaltung nach einem der Ansprüche 2 oder 3, dadurch gekennzeichnet, daß die zwei Transistoren Transistoren mit identischem Leitungskanal (P) sind.

5. Schaltung nach einem der Ansprüche 2 bis 4, dadurch gekennzeichnet, daß einer der Transistoren ein P-Kanaltransistor ist, in einem P-dotierten Substrat gebildet ist und in einer Wanne (14) enthalten ist, die elektrisch an das Source-Potential dieses Transistors angeschlossen (16) ist.

# FIG_1-a

# FIG_1-b

# FIG_2

# FIG_3